# EUROPEAN PATENT SPECIFICATION

(11) **EP 2 099 293 B1**
(45) Date of publication and mention of the grant of the patent: **27.01.2016**
(21) Application number: 07870153.9
(22) Date of filing: 14.12.2007
(51) Int. Cl.: A01N 35/02, A01N 25/22, A61L 2/18, A23B 4/20, A23L 3/3499, A01P 1/00, A01N 59/16

(54) **A STABLE GLUTARALDEHYDE COMPLEX**
STABILER GLUTARALDEHYDKOMPLEX
COMPLEXE DE GLUTARALDÉHYDE STABLE

(30) Priority: 14.12.2006 ZA 200610541
(43) Date of publication of application: 16.09.2009
(73) Proprietor: Martin, Antonietta Pamela, 1724 Roodepoort (ZA)
(72) Inventor: WYNDHAM-QUIN, William, 1682 Midrand (ZA)
(74) Representative: Adamson Jones
(86) International application number: PCT/ZA2007/000088
(87) International publication number: WO 2008/074038

(56) References cited:
- EP-A- 0 046 375
- EP-A- 0 599 692
- EP-A- 0 609 106
- WO-A-01/32814
- WO-A-03/011027
- DATABASE WPI Week 200530 Thomson Scientific, London, GB; AN 2005-288467 XP002506906 & JP 2005 082574 A (MARUISHI PHARM CO LTD) 31 March 2005 (2005-03-31)
- DATABASE WPI Week 199841 Thomson Scientific, London, GB; AN 1998-476636 XP002506907 & JP 10 203908 A (NAGASE KASEI KOGYO KK) 4 August 1998 (1998-08-04)
- J. E. THOMSON, N. A. COX & J. S. BAILEY: "Control of Salmonella and extension of shelf-life of broiler carcasses with a glutaraldehyde product." J. FOOD SCIENCE, vol. 42, no. 5, 1977, pages 1353-1355, XP002506909

## Description

### BACKGROUND OF THE INVENTION

This invention relates generally to a stable aqueous glutaraldehyde solution.

Glutaraldehyde is widely used as a disinfectant and sterilizing agent.

A glutaraldehyde molecule, in a linear molecular structure, has two terminal aldehyde groups that exhibit typical aldehyde chemistry. The aldehyde groups react with free amine groups of a cell membrane of a microorganism cell. This reaction disrupts the cellular chemistry of the microorganism and leads to the death of the cell.

The glutaraldehyde molecule has a tendency, especially at low concentrations, to adopt a cyclic configuration. In this form, the molecule loses its biocidal effect and, due to its monomeric nature, has a tendency to diffuse into the atmosphere causing a health hazard, as it is a potent dermal and respiratory irritant.

The glutaraldehyde molecule at relatively higher concentrations, when left over a period of time, will polymerize with other glutaraldehyde molecules, a process which accelerates at temperatures below 4°C. At temperatures greater than 50°C the glutaraldehyde molecule breaks down. Once again this will result in loss of the biocidal effect.

It is known in the art to take a product containing a glutaraldehyde solution and, just before use, diluting it. In doing so the tendency of the glutaraldehyde molecule to polymerize is reduced. Raising the pH subsequently activates the solution. The activation increases the reactivity of the aldehyde groups to the amine groups, however the stability of the solution is compromised in so doing to the extent that the solution is not stable for much longer than 28 days.

There are a number of problems associated with the use of such a product. Not only does the user have to dilute the product prior to use but also activate it. The resultant product is corrosive and unstable. Furthermore, in certain applications, glutaraldehyde, due to its acrid smell, can create discomfort to a user thereof. The product of the invention at least partially addresses the aforementioned problems.

EP0046375 discloses chemical sterilization and disinfecting solutions containing saturated dialdehydes having from 2 to 6 carbon atoms and a water soluble compound of the formula RO(CH₂CH₂0)ₙCH₂CH₂0H where R is H- or CH₃- and n is an integer from 1 to 22 to reduce the vaporisation of the aldehyde component.

WO03/011027 discloses a stable aqueous glutaraldehyde solution comprising a surfactant and a pH modifier to bring the pH of the solution to 6.0 to 8.5.

EP0599692 discloses compositions in which the bactericidal activity of a bactericidal agent such as glutaraldehyde is activated by a pyrrolidone derivative.

EP06069106 discloses a stable, aqueous, glutaraldehyde solution comprising an aqueous solution of glutaraldehyde, a non-ionic detergent, and sufficient of a pH modifier to bring the pH of the solution to 6 to 8.5. The solution does not require an activator prior to use and is not a skin irritant. It is also stable for a period of up to 6 months at temperatures of 25 °C.

### SUMMARY OF INVENTION

The invention provides a stable glutaraldehyde polymer complex solution that includes:
(a) glutaraldehyde (OCH(CH₂)₃CHO) in a 0.005% to 45% m/v concentration;
(b) a non-ionic surfactant;
(c) a buffer;
(d) a sufficient amount of a pH modifier to bring the pH of the solution to within a 6.0 to 9.0 range; and
(e) a polyvinyl pyrrolidone polymer.

Stable, in the context of the invention, refers to a glutaraldehyde polymer complex solution having a shelf life of at least six months without the glutaraldehyde molecules polymerizing or the pH dropping below 5.

The stable glutaraldehyde polymer complex solution preferably includes glutaraldehyde in a 2% to 45% m/v concentration.

The stable glutaraldehyde polymer complex solution preferably includes the non-ionic surfactant in a 0.6% to 25% m/v concentration.

The non-ionic surfactant may be an alcohol ethoxylate surfactant.

The alcohol ethoxylate surfactant is preferably an alcohol ethoxylate with between 3 to 10 ethoxyl groups.

In order that the stable glutaraldehyde polymer complex solution maintains a pH, throughout the shelf life, of at least 5.0, the solution preferably includes the buffer in a concentration which is not less than 0.05% m/v.

The buffer may be potassium acetate preferably in a one molar solution.

The pH modifier may be any one of the following compounds: potassium hydroxide, sodium hydroxide and sodium bicarbonate.

The pH modifier is preferably potassium hydroxide in a one molar solution.

The pH of the stable glutaraldehyde polymer complex solution may be maintained, at the time of manufacture, within a 7.0 to 8.5 range.

The duration of the biocidal effect, when the stable glutaraldehyde polymer complex solution is applied to a surface, may be prolonged by the addition, to the solution, of a polymer.

The polyvinyl pyrrolidine polymer creates a residual effect of the stable glutaraldehyde polymer complex solution on a surface to which it is applied, thereby increasing the biocidal effect of the complex solution.

The polyvinyl pyrrolidine polymer may be either PVPK30 or PVPK90, preferably PVPK90.

The stable glutaraldehyde polymer complex solution may include a biocidal enhancer.

The biocidal enhancer may include at least one of the following: a twin chain quaternary ammonium compound and a zinc oxide powder.

The twin chain quaternary ammonium compound is preferably a quaternary ammonium compound, with nomenclature 2.10.80, such as Arquad^{™}.

The zinc oxide powder may have particles with a particle size of ≤100nm and preferably comprises a 99.9% pure zinc oxide.

The zinc oxide may comprise particles with a particle size of ≤100nm.

Preferably the biocidal enhancer includes the twin chain quaternary ammonium compound a the zinc oxide powder.

Preferably the twin chain quaternary ammonium compound is present in the stable glutaraldehyde polymer complex solution, when added as the biocidal enhancer to the complex solution, in a 5% to 10% m/v concentration.

Preferably the zinc oxide powder is present in the stable glutaraldehyde polymer complex solution in a 0,1% m/v concentration.

The stable glutaraldehyde polymer complex solution may additionally include a deodorizer.

The deodorizer may include at least one of the following: an odour neutralizer comprising a 95% m/v complex of cyclohexene and 1-methyl-(4)-1-methyl-ethenyl, manufactured by Symrise AG and Bayer and with a manufacturer's product code 183653(10348088-3) (hereinafter referred to as the odour neutralizer) and an odour absorber.

The odour absorber may be an odour absorber product, manufactured by Symrise AG and Bayer AG, with manufacturer's product code number: 708177(10348088/2) which includes resin acids, rosin acids and hydrogenated Me esters (hereinafter referred to as the odour absorber).

Preferably, the deodorizer includes both the odour neutralizer and the odour absorber.

Preferably the odour neutralizer and the odour absorber are present in the stable glutaraldehyde polymer complex solution, when added as the deodorizer to the complex solution, in a 0.05% m/v concentration and a 0.025% m/v concentration respectively.

The residual effect of the stable glutaraldehyde polymer complex solution may be adjusted by altering the thickness of the coating.

The stable glutaraldehyde polymer complex solution may be diluted, with deionized or potable water, to produce a biocidal dispersant.

The biocidal dispersant may include glutaraldehyde in a 0,001% to 5% m/v concentration.

A method of preserving fish in a holding tank of a fishing vessel which includes the step of applying the biocidal dispersant to the holding tank of the fishing vessel is disclosed.

Preferably, the biocidal dispersant is added to an ice slurry contained within the holding tank.

A method of prolonging the shelf life of fresh meat, such as chicken, pork or beef, which includes the step of applying the biocidal dispersant to the meat subsequent to slaughter is disclosed.

### DESCRIPTION OF PREFERRED EMBODIMENT

A stable glutaraldehyde polymer complex solution, according to the invention, is manufactured, in a concentrate, by heating a body of water to a temperature of between 40°C and 50°C. An alcohol ethoxylate surfactant is added to the body of water followed by glutaraldehyde. The glutaraldehyde is allowed to complex with the alcohol ethoxylate for a period of between 30 and 60 minutes, whilst maintaining the temperature of the water between 40°C and 50°C.

The specific alcohol ethoxylate surfactant to be used is dependent on the application of the product of the invention which dictates the foaming requirements e.g. 3 alcohol ethoxylate is a low foaming surfactant which would be suitable for applications that require low foaming properties such as clean in place surface cleaners and disinfectants. 7 alcohol ethoxylate (i.e. an alcohol ethoxylate which includes 7 ethoxyl groups) is preferably used due to its suitability in a majority of important applications of the product of the invention (i.e. the stable glutaraldehyde polymer complex solution).

Waiting for the period to elapse allows the glutaraldehyde to complex with the 7 alcohol ethoxylate, substantially to completion, to produce a glutaraldehyde-surfactant complex solution.

The glutaraldehyde-surfactant complex solution is quickly cooled by the addition of an amount of cold water. The amount is sufficient to reduce the temperature below 30°C, without the glutaraldehyde-surfactant complex solution reaching a predetermined end volume.

Thereafter PVPK90 and a biocidal enhancer which includes Arquad^{™} or zinc oxide (99.9% pure) pulverized to particles of ≤ 100nm (hereinafter referred to as nano zinc oxide), are added to the glutaraldehyde-surfactant complex solution, to produce a glutaraldehyde-polymer complex solution. A further amount of water is then added, at an ambient temperature, to increase the volume of the glutaraldehyde-polymer complex solution to the predetermined end volume.

For applications of the product of the invention (i.e. the stable glutaraldehyde polymer complex solution) which involve the treatment of drinking water, Arquad^{™} is excluded from the biocidal enhancer due to its toxic nature when ingested. However in other water treatment applications, Arquad^{™} would be included due to its broad spectrum algicidal and fungicidal properties. Nano zinc oxide is of particular use, as part of the biocidal enhancer, in applications of the invention which are related to personal hygiene, and surface cleaners and disinfectants.

The active ingredient of nano zinc oxide, is a known biocide with antibacterial, antiviral and antifungal properties. Zinc oxide is not known to be sporocidal whereas glutaraldehyde on the other hand is known to have such properties. The combination of these two biocides to the stable glutaraldehyde polymer complex solution is complementary and cumulative in the sense of the antibacterial, antiviral and antifungal properties it imparts on this solution. This complementary effect has the advantage, in high level disinfectant applications, of allowing a reduction in the concentration of glutaraldehyde in the stable glutaraldehyde polymer complex solution, thereby decreasing the glutaraldehyde volatility, without any concomitant decrease in its biocidal effects. In other words the presence of the zinc oxide powder, suspended in the complex solution, has the effect of "freeing up" glutaraldehyde to effect its task as an exclusive sporocide.

PVPK90 enhances the biocidal effect of the stable glutaraldehyde polymer complex solution by slowing down the release of the active ingredient (i.e. glutaraldehyde) therefrom to create a residual effect of the glutaraldehyde on a surface cleaned by the complex solution.

PVPK90, by its inclusion to the stable glutaraldehyde polymer complex solution, has been shown to extend the biocidal effect of the stable glutaraldehyde polymer complex solution by up to 14 days. Example 1 below illustrates the residual efficacy results of the complex solution with PVPK90.

A pH modifier, such as potassium hydroxide, is added in a sufficient amount to adjust the pH of the glutaraldehyde-polymer complex solution to within a 7.5 to 7.8 range.

Finally, a potassium acetate buffer in a one molar solution, is added to the glutaraldehyde polymer complex solution to produce a concentrate of the stable glutaraldehyde polymer complex solution.

The buffer maintains the pH of the concentrate, during the shelf life of the stable glutaraldehyde polymer complex solution i.e. at least six months from manufacture, at least above 5.0 due to a buffering effect. Example 2 below illustrates the stabilizing effect, to the pH of the solution, of the buffer.

The concentrate of the stable glutaraldehyde polymer complex solution includes the following active ingredients in the following concentrations:

| | | |
|---|---|---|
| (a) | glutaraldehyde - | 2% to 45% m/v; |
| (b) | 7 alcohol ethoxylate- | 0.6% to 25% m/v; |
| (c) | PVPK90 - | 0.1 % to 0.4% m/v; and optionally, depending on the application of the complex solution |
| (d) | nano zinc oxide | 0.1 % m/v; or / and |
| (e) | Arquad^{™} | 5% to 10% m/v. |

A deodorizer, including the odour absorber and the odour neutralizer can optionally be added, at this stage of the process of production, to a stable glutaraldehyde polymer complex solution which has a glutaraldehyde concentration of 2% m/v or more. The odour neutralizer and the odour absorber are added to the complex solution to effect concentration of 0,05% m/v and 0,025% m/v respectively.

To produce a biocidal product capable of application, by a variety of means, to a variety of surfaces, the concentrate is diluted with potable water to produce a dispersant with glutaraldehyde, now in an active and stable state, in a 0.001% to 5% m/v concentration.

The product of the invention, applied as the dispersant, has resulted in a reduction in the amount of fish, in a holding tank of a fishing vessel, lost through cross contamination and decomposition.

The dispersant is directly or indirectly incorporated into the ice and water slurry bed that is applied to the holding tank prior to the fish being stored therein. This allows the dispersant to come into proximal contact with the fish and the septic fish stomach contents. In so doing, the dispersant decontaminates the stomach contents thereby avoiding cross contamination of other fish in the tank.

Trials, using the dispersant in the above application, have shown that the loss of fish through decomposition may be reduced by 20% to 40% over a typical 3-day period whilst the fishing vessel is at sea. Example 4 below illustrates the effectiveness of the dispersant in its application to the holding tanker of fishing vessels.

The dispersant, at a concentration of less than 0.05% m/v of glutaraldehyde, applied as a spray to the gutted carcass of a freshly slaughtered chicken, cow or pig has resulted in an extension of the shelf life of the chicken meat, once packed for retail, by up to 2 days.

In these applications, the dispersant, as it is completely biodegradable, leaves no toxic residue on the fish, chicken pork or beef meat. Tests have shown that due to the very low concentrations of glutaraldehyde, a resulting glutaraldehyde residue on the meat is no more toxic than normal potable drinking water - see in this regard Example 5.

The dispersant finds numerous further applications for, when added to a variety of additives such as degreasing agents, solvents, detergents, thickeners, fragrances, colourants and skin conditioners, it forms the basis of anti-microbial products.

### Example 1: Residual efficacy tests

Table 1 tabulates results of a residual efficacy test done on the product of the invention (sample number RT14) by the South African Bureau of Standards (SABS) using the European surface test method (1993), to determine the residual efficacy of the sample on bacterially contaminated surfaces.

**Table 1**

| Sample (RT14) | Contact Time | Dilution | Day | Control | | | Rate (%) of kill | | |
|---|---|---|---|---|---|---|---|---|---|
| | | | | Pse | Sta | Asp | Pse | Sta | Asp |
| (Report No. 2209131/03-6100/016440) | 1 min | 'As is' | 24h | 1,4 × 10⁶ | 1,4 × 10⁶ | 5,6 × 10⁵ | 99,9 | 99,9 | 39,3 |
| | | | 48h | 1,6 × 10⁶ | 1,2 × 10⁶ | 2,7 × 10⁵ | 99,9 | 99,9 | 98,0 |
| | | | 7 days | 1,9 × 10⁶ | 2,1 × 10⁶ | 3,3 × 10⁶ | 99,9 | 99,9 | 99,7 |
| | | | 14 days | 1,5 × 10⁶ | 1,3 × 10⁶ | 2,7 × 10⁶ | 99,9 | 99,9 | 98,4 |
| Stable glutaraldehyde polymer complex solution (6% glutaraldehyde) + PVPK90 | | | 30 days | 6,9 × 10⁵ | 1,4 × 10⁶ | 1,3 × 10⁶ | 99,9 | 99,3 | 82,7 |
| | | | | | | | | | |
| | | 1/25 | 24h | 1,4 × 10⁶ | 1,4 × 10⁶ | 5,6 × 10⁵ | 98,2 | 92,1 | 77,0 |
| | | | 48h | 1,6 × 10⁶ | 1,2 × 10⁶ | 2,7 × 10⁵ | 97,3 | 69,2 | 18,5 |
| | | | 7 days | 1,9 × 10⁶ | 2,1 × 10⁶ | 3,3 × 10⁶ | 91,3 | 92,1 | 94,9 |
| | | | 14 days | 1,5 × 10⁶ | 1,3 × 10⁶ | 2,7 × 10⁶ | 80,7 | 86,2 | 86,3 |
| | | | 30 days | 6,9 × 10⁵ | 1,4 × 10⁶ | 1,3 × 10⁶ | 82,7 | 90,4 | 90,0 |
| | | | | | | | | | |
| | | 1/100 | 24h | 1,4 × 10⁶ | 1,4 × 10⁶ | 5,6 × 10⁵ | 86,2 | 88,5 | <0,1 |
| | | | 48h | 1,6 × 10⁶ | 1,2 × 10⁶ | 2,7 × 10⁵ | 90,3 | 89,8 | 27,8 |
| | | | 7 days | 1,9 × 10⁶ | 2,1 × 10⁶ | 3,3 × 10⁶ | 96,3 | 92,9 | 94,6 |
| | | | 14 days | 1,5 × 10⁶ | 1,3 × 10⁶ | 2,7 × 10⁶ | 85,3 | 87,6 | 70,4 |
| | | | 30 days | 6,9 × 10⁵ | 1,4 × 10⁶ | 1,3 × 10⁶ | <0,1 | 82,9 | 95,8 |

### Organisms used:

Pseudomonas aeruginosa SATCC Pse 16 (Pse)
Staphylococcus aureus SATCC 53 (Sta)
Aspergillus niger ATCC 16404 (Asp)

### European Surface Test Method:

The surfaces of stainless steel discs (2cm²) were seeded with a 0.1ml bacterial suspension containing 10⁷ bacterial cells/ml and thereafter dried at 37°C for one hour. The 0.1ml RT14 sample was dropped onto the dried disc, ensuring that the disc was totally covered. After 24 hours, 48 hours, 7 days, 14 days and 30 days respectively, the surfaces were again seeded with a bacterial suspension. After a minute contact time, the stainless steel discs were placed in conical flasks containing 10ml of a neutralization medium to neutralize the RT14 and the flasks were shaken to dislodge the cells from the discs. Tenfold dilutions of the flask contents were placed onto sterile petri dishes. Nutrient agar was poured onto the petri dishes, mixed with contents, and incubated at 37°C for 2 days. Colony-forming bacterial cells were counted. Untreated stainless steel discs were used as controls.

### Conclusion:

RT14 "as is" undiluted (a 6% m/v solution of glutaraldehyde with PVPK90 in a 0,1% m/v concentration) was effective on bacteria, for at least 30 days whereas unstabilized, uncomplexed 6% m/v glutaraldehyde "as is" has been shown to be effective for up to 10 hours.

### Example 2: Stability tests

**Table 2**

| Test time period and temperature | Product 1 0.005% stable glutaraldehyde polymer complex solution with PVPK90 | Product 2 1% stable glutaraldehyde polymer complex solution with PVPK90 | Product 3 2% stable glutaraldehyde polymer complex solution with PVPK90 | Product 4 10% stable glutaraldehyde polymer complex solution with PVPK90 | Product 5 20% stable glutaraldehyde polymer complex solution with PVPK90+ 10% Arquad™ | Product 6 2% stable glutaraldehyde polymer complex solution with PVPK90+ 0.1 % Nano Zinc Oxide |
|---|---|---|---|---|---|---|
| **Room temperature** | pH | pH | pH | pH | pH | pH |
| Month 1 | 7.8 | 7.8 | 7.8 | 7.8 | 7.8 | 7.8 |
| Month 2 | 7.2 | 7.1 | 7.0 | 7.0 | 6.8 | 7.35 |
| Month 3 | 7.0 | 6.98 | 6.87 | 6.67 | 6.63 | 7.12 |
| Month 4 | 6.9 | 6.85 | 6.75 | 6.25 | 6.34 | 6.98 |
| Month 5 | 6.84 | 6.75 | 6.7 | 5.95 | 5.89 | 6.83 |
| Month 6 | 6.8 | 6.66 | 6.68 | 5.78 | 5.62 | 6.61 |
| Month 7 | 6.83 | 6.46 | 6.56 | 5.56 | 5.1 | 6.53 |
| Month 8 | 6.8 | 6.38 | 6.2 | 5.2 | 4.95 | 6.48 |
| **Elevated temperature 40°C** | 7.8 | 7.8 | 7.8 | 7.8 | 7.8 | 7.8 |
| Week 1 | 6.95 | 6.74 | 6.73 | 6.51 | 6.37 | 6.85 |
| Week 2 (equivalent to 6 months shelf life) | .78 | 6.52 | 6.60 | 6.01 | 5.76 | 6.71 |
| Week 3 | 6.65 | 6.34 | 6.27 | 5.86 | 5.32 | 6.7 |
| Week 4 (equivalent to 1 year shelf life) | 6.62 | 5.96 | 5.89 | 5.11 | 4.98 | 6.53 |

### Example 3: Biocidal efficacy tests

### Test 1

Tests done by SABS microbiology department using the Kelsey Sykes modified suspension tests to determine the effectiveness of the stable glutaraldehyde polymer complex solution as a high-level disinfectant.
The mcroorganism on which the complex solution was tested is *Bacillus subtillus var globi.*
Expected log reduction: Log 6 in at least 4 hours.

Products tested were:
Product 1 - 3% m/v stabilized glutaraldehyde with PVPK90 (includes the deodorizer of the invention in a concentration of 0.1 % m/v)
Product 2 - 1.7% m/v stabilized glutaraldehyde with PVPK90 and 0.1 % m/v nano zinc oxide (including the deodorizer of the invention in a concentration of 0.1 % m/v)

**Table 3**

| Product | Age of product at time of test (months) | Time take to kill the Bacillus and achieve a Log 6 reduction | Kill rate % |
|---|---|---|---|
| Product 1 | 1 | 3.6 hours | 99.999 |
| Product 1 | 6 | 4 hours | 99.999 |
| Product 2 | 1 | 3.75 hours | 99.999 |
| Product 2 | 6 | 3.99 hours | 99.999 |

### Test 1 - Virucidal efficacy

Dilution: 1/20 of RT14
Test viral organisms: 36PH 15597/B1 (MS2) and 37PH 13706/B1 (PHI 174)
Test Load: 10⁷ organisms per 10ml of test solution.
Exposure time: 15 mins, a 99.9% kill rate obtained in this time.
Conclusion: passed.

### Test 3 - Bacterial efficacy

Dilution: 1/150 of RT14
Diluent: sterile water with a hardness of 250ppm and containing 1% m/v skimmed milk.
Test temperature: 22°C
Test organisms: *staphylococcus aureus* SATCC Sta 53.
Test load: 10⁵ per 10ml of test solution.
Exposure times: 2 min, 5 min, 7 min, 10 min and 12 min.
Above are tests repeated with R14 but at following dilutions: 1/100, 1/150 and 1/200.

Conclusion: best results were at 1/100 dilution ratio at which a 99.9% kill rate was obtained. The above results were better than an unstabilized, uncomplicated glutaraldehyde 6% m/v solution.

### Example 4: Fish hold biocidal efficacy and toxicity trial

To gather data for this trial, three trips, on two fishing vessels, were used. Results of the trial were compared to historical fishing vessel catch quality fish processed as pilchards or animal feed. The company involved in this trial was OCEANIC of Saldahna Bay, South Africa.

Traditionally the vessels have gone out to sea with 30 tons of ice. The ice is mixed with fish and 20 tons of sea water, to create a fish icy slurry held in the vessel's hold. The vessel can be out at sea for several days before returning to land. The amount of fish placed in the hold can vary from 100 to 150 tons. During the three days out at sea the pressure placed on the fish by the remainder of the catch causes the bellies of some of the fish to burst and cross contaminate the surrounding fish with the bacterial contents of the fish gut, resulting in only between 45% to 55% of the fish caught being suitable for canning processing. The remainder of spoilt fish would be used to make animal feed.

The table below tabulates the results of this trial:

**Table 4**

| Trip No. | Vessel 1 (good fish yield) 10% m/v stable glutaraldehyde polymer complex solution + 0.2% m/v PVPK90 placed in the ice slurry in the vessel's hold (hereinafter referred to as G14) | Vessel 2 (good fish yield) 10% m/v stable glutaraldehyde polymer complex solution + 0.2% m/v PVPK90 placed in the ice slurry in the vessel's hold |
|---|---|---|
| 1 | 80% | 95% |
| 2 | 85% | 91% |
| 3 | 90% | 94% |

The difference between the results of vessel 1 and 2 can be accounted for by the fact that vessel 2 was cleaned better than vessel 1.

Fish samples from each trip were canned and, after canning, tested for residual glutaraldehyde in the cans. These residual glutaraldehyde tests were done by KLS laboratories in Midrand, South Africa, using standard HPLC techniques.

The results of these residual tests concluded that no glutaraldehyde was detected in the cans. The standard was identifiable by the HPLC technique at 1 ppm. Standard derivitized glutaraldehyde was bought from Sigma Aldrich Germany. The standard graphs of the HPLC were verified five times to ensure that the HPLC method was able to detect a minimum of 1 ppm glutaraldehyde.

It was concluded that as no glutaraldehyde was detectable in the canned fish, the method of the invention would have no toxic effects.

### Example 5: Fresh meat shelf life prolonging efficacy test.

### Test 1

This test was conducted on freshly skinned beef and chicken washed with a 2% m/v stable glutaraldehyde polymer complex solution containing PVPK90 in a 0,1% m/v concentration. The washed meat was thereafter placed in a freezer without rinsing the meat beforehand. The meat was then taken out of the freezer, thawed and then left in the normal fridge at a temperature of 4° C to ascertain how long it would take before the meat went off. Traditionally butchers turn around the meat in their fridges every two days to obtain a fridge shelf life of three days, which equates to a total of five days from slaughter.

Photographs were taken of the meat before and after the meat had been refrigerated for 7 days. The photograph revealed no visible change in the meat.

The test meat was then refrozen and sent to Highveld Biological Laboratories, Gauteng, South Africa, for toxicity testing. The reference standard was South African municipal potable water.

The result of this toxicity test concluded that there was no more toxicity found in the cell culture tests which were more than the normal tap water that we drink.

Hence the product can be used as a carcass wash at all abattoirs.

### Test 2 - Meat G14 Experiment

### Aim:

To extend the shelf life of meat bought at a butcher by consumers with no cooling facilities. Measurement of differences in bacterial counts between pork and mutton and frozen and unfrozen samples.

### Materials and Methods:

A piece of approximately 200 grams of each of the following was used:
Pork (frozen and already cut into chops) and mutton (whole carcass slaughtered the day before and kept at 6°C for a day). The mutton was cut into chops two hours before the application of G14. The pork was weighed and was sprayed manually with a 1:300 dilution of G14 after thawing. The meat was then placed in a plastic container. A second piece of pork was weighed and not sprayed. This was used as a control and placed in a separate plastic container. Mutton was treated the same way to get an experimental and control sample.

The first swabs for total plate counts (TPC) were taken 15 minutes after the application of G14 at day 0 and the samples placed in a fridge at approximately 6°C. These procedures were repeated at day 7 and day 14. At day 14 the meat was weighed again to determine moisture losses. The place where the swabs were taken is in the middle of the piece of meat.

### Results:

**Table 5 - Bacterial Total Plate Counts**

| | PT | PC | MT | PC |
|---|---|---|---|---|
| Day 0 | 4,6 × 10⁷ | 3 × 8⁸ | 7 × 10⁶ | 3,3 × 10⁷ |
| Day 7 | 1,1 × 10⁵ | 1,2 × 10⁵ | 8 × 10³ | 1,6 × 10⁴ |
| Day 14 | 3,4 × 10⁶ | 1,2 × 10⁶ | 6 × 10⁴ | 3,2 × 10⁵ |

**Table 6 - Mass of Meat (grams)**

| | PT | PC | MT | PC |
|---|---|---|---|---|
| Day 0 | 211,2 | 186,2 | 148,8 | 179,3 |
| Day 7 | 210,3 | 180,4 | 143,8 | 172,9 |
| MASS LOSS (%) | 0,4 | 3,0 | 2,8 | 3,6 |

| | | | | |
|---|---|---|---|---|
| PT = Pork Treated; PC = Pork Control; MT = Mutton Treated; MC = Mutton Control | | | | |

### Discussion:

Discolouration: no discolouration of the treated meat was observed at day 0 after treatment or day 7 or 14. The control samples (port and mutton) showed a shiny appearance by day 7 and slight greenish appearance at day 14.

Odour: at day 0 and day 7 none of the samples had any odour. At day 14 the control pork and control mutton samples had an odour of meat that is going off but still no change in the treated meat.

Total plate counts: the treated samples in the pork and the mutton were one log lower than the controls as measured at day 0. With the cold temperatures the experimental and control samples at day 7 were three logs lower. At day 14 the values moved one log up but are still lower than day 0.

### Conclusion:

The treatment of meat can be done with G14 and it is safe for human consumption because the product breaks down at 55°C.

The cold temperature played a definite role in the preservation of the meat as reflected in the values of the control samples (down by log x 3).

The treatment of the meat was moderately effective as reflected by the treated samples (down by log x 1).

The treatment with G14 and cold temperatures reached maximum effectivity at day 7 to 9.

Mutton (log x 2) did better than pork in the treated group as reflected at day 14.

Unpleasant smells are removed in treated samples up to day 14. The use of the product in a butchery to reduce "smells" can be considered.

No change in colour or macroscopically abnormalities occurred with treatment of G14.

The loss of mass over 14 days of 3% can be considered as normal.

### Recommendations:

Use a dilution of 1:100 for treatment of meat in the absence of cooling facilities. Consumers can treat meat on a daily basis with G14 to get the maximum effectivity of the product.

Use G14 in the abattoir after the skin is removed and again after evisceration to reduce the bacterial load to the maximum. Treat the meat again immediately after the carcass is cut into chops / pieces.

Avoid freezing carcasses before the treatment with G14.

Mutton (and beef) reacted better than the pork in the trial.

## Claims

1. A stable glutaraldehyde polymer complex solution which includes:
(a) glutaraldehyde (OCH(CH₂)₃CHO) in a 0.005% to 45% m/v concentration;
(b) a non-ionic surfactant;
(c) a buffer;
(d) a sufficient amount of a pH modifier to bring the pH of the solution to within a 6.0 to 9.0 range; and
(e) a polyvinyl pyrrolidone polymer.

2. A stable glutaraldehyde polymer complex solution according to claim 1 wherein the non-ionic surfactant is an alcohol ethoxylate surfactant with between 3 to 10 ethoxyl groups.

3. A stable glutaraldehyde polymer complex solution according to claim 2 wherein the alcohol ethoxyl surfactant is included in a 0,6% to 25% m/v concentration.

4. A stable glutaraldehyde polymer complex solution according to any one of claims 1 to 3 wherein the buffer is a potassium acetate buffer in a one molar solution included in a concentration of at least 0,05% m/v.

5. A stable glutaraldehyde polymer complex solution according to any one of claims 1 to 4 wherein the pH modifier is any one of the following compounds: potassium hydroxide, sodium hydroxide and sodium bicarbonate.

6. A stable glutaraldehyde polymer complex solution according to claim 5 wherein the pH modifier is potassium hydroxide in a one molar solution.

7. A stable glutaraldehyde polymer complex solution according to any one of claims 1 to 6 which includes a biocidal enhancer which includes at least one of the following: a twin chain quaternary ammonium compound and a zinc oxide powder.

8. A stable glutaraldehyde polymer complex solution according to claim 7 wherein the twin chain quaternary ammonium compound is a quaternary ammonium compound, with nomenclature 2.10.18.

9. A stable glutaraldehyde polymer complex solution according to claim 7 or 8 wherein the zinc oxide powder is 99,9% pure zinc oxide with a particle size of ≤100nm and included in a 0.1 % m/v concentration.

10. A stable glutaraldehyde polymer complex solution according to any one of claims 7 to 9 wherein the twin chain quaternary ammonium compound is included in a 5% to 10% m/v concentration.

## Patentansprüche

1. Stabile Glutaraldehydpolymerkomplexlösung, welche Folgendes beinhaltet:
(a) Glutaraldehyd (OCH(CH₂)₃CHO) in einer m/v-Konzentration von 0,005 % bis 45 %;
(b) ein nichtionisches Tensid;
(c) einen Puffer;
(d) eine ausreichende Menge eines pH-Modifikators, um den pH der Lösung innerhalb eines Bereichs von 6,0 bis 9,0 zu bringen; und
(e) ein Polyvinylpyrrolidonpolymer.

2. Stabile Glutaraldehydpolymerkomplexlösung nach Anspruch 1, wobei das nichtionische Tensid ein Alkoholethoxylattensid mit 3 bis 10 Ethoxylgruppen ist.

3. Stabile Glutaraldehydpolymerkomplexlösung nach Anspruch 2, wobei das Alkoholethoxyltensid in einer m/v-Konzentration von 0,6 % bis 25 % enthalten ist.

4. Stabile Glutaraldehydpolymerkomplexlösung nach einem der Ansprüche 1 bis 3, wobei der Puffer ein Kaliumacetatpuffer in einer einmolaren Lösung ist, der in einer m/v-Konzentration von mindestens 0,05 % enthalten ist.

5. Stabile Glutaraldehydpolymerkomplexlösung nach einem der Ansprüche 1 bis 4, wobei der pH-Modifikator eine der folgenden Verbindungen ist: Kaliumhydroxid, Natriumhydroxid und Natriumbicarbonat.

6. Stabile Glutaraldehydpolymerkomplexlösung nach Anspruch 5, wobei der pH-Modifikator Kaliumhydroxid in einer einmolaren Lösung ist.

7. Stabile Glutaraldehydpolymerkomplexlösung nach einem der Ansprüche 1 bis 6, welche einen Biozid-Verstärker beinhaltet, welcher mindestens eines der Folgenden beinhaltet: eine quartäre Zweikettenammoniumverbindung und ein Zinkoxidpulver.

8. Stabile Glutaraldehydpolymerkomplexlösung nach Anspruch 7, wobei die quartäre Zweikettenammoniumverbindung eine quartäre Ammoniumverbindung mit der Nomenklatur 2.10.18 ist.

9. Stabile Glutaraldehydpolymerkomplexlösung nach Anspruch 7 oder 8, wobei das Zinkoxidpulver 99,9 % reines Zinkoxid mit einer Partikelgröße von ≤100 nm und in einer m/v-Konzentration von 0,1 % enthalten ist.

10. Stabile Glutaraldehydpolymerkomplexlösung nach einem der Ansprüche 7 bis 9, wobei die quartäre Zweikettenammoniumverbindung in einer m/v-Konzentration von 5 % bis 10 % enthalten ist.

## Revendications

1. Solution de complexe de polymère de glutaraldéhyde stable qui comprend :
(a) du glutaraldéhyde (OCH(CH₂)₃CHO) en une concentration m/v de 0,005 % à 45 %;
(b) un agent tensioactif non-ionique ;
(c) un tampon ;
(d) une quantité suffisante d'un modificateur de pH pour amener le pH de la solution dans la plage allant de 6,0 à 9,0 ; et
(e) un polymère de polyvinylpyrrolidone.

2. Solution de complexe de polymère de glutaraldéhyde stable selon la revendication 1, ledit agent tensioactif non-ionique étant un agent tensioactif d'éthoxylate d'alcool comportant 3 à 10 groupes éthoxy.

3. Solution de complexe de polymère de glutaraldéhyde stable selon la revendication 2, ledit agent tensioactif éthoxylique d'alcool étant compris en une concentration m/v de 0,6 % à 25 %.

4. Solution de complexe de polymère de glutaraldéhyde stable selon l'une quelconque des revendications 1 à 3, ledit tampon étant un tampon d'acétate de potassium en solution molaire compris en une concentration d'au moins 0,05 % en m/v.

5. Solution de complexe de polymère de glutaraldéhyde stable selon l'une quelconque des revendications 1 à 4, ledit modificateur de pH étant l'un quelconque des composés suivants : l'hydroxyde de potassium, l'hydroxyde de sodium et le bicarbonate de sodium.

6. Solution de complexe de polymère de glutaraldéhyde stable selon la revendication 5, ledit modificateur de pH étant de l'hydroxyde de potassium en solution molaire.

7. Solution de complexe de polymère de glutaraldéhyde stable selon l'une quelconque des revendications 1 à 6 qui comprend un activateur biocide comportant au moins l'un des composés suivants : un composé ammonium quaternaire à chaîne double et une poudre d'oxyde de zinc.

8. Solution de complexe de polymère de glutaraldéhyde stable selon la revendication 7, ledit composé ammonium quaternaire à chaîne double étant un composé ammonium quaternaire ayant la nomenclature 2.10.18.

9. Solution de complexe de polymère de glutaraldéhyde stable selon la revendication 7 ou 8, ladite poudre d'oxyde de zinc étant de l'oxyde de zinc pur à 99,9 % ayant une taille de particule ≤ 100 nm et étant comprise en une concentration m/v de 0,1 %.

10. Solution de complexe de polymère de glutaraldéhyde stable selon l'une quelconque des revendications 7 à 9, ledit ammonium quaternaire à chaîne double étant compris en une concentration m/v de 5 % à 10 %.
